# EUROPÄISCHE PATENTSCHRIFT

(11) **EP 0 713 461 B1**
(45) Veröffentlichungstag und Bekanntmachung des Hinweises auf die Patenterteilung: **11.11.1998**
(21) Anmeldenummer: 94924849.6
(22) Anmeldetag: 05.08.1994
(51) Int. Cl.: B60T 8/36, F16K 27/02

(54) **DRUCKREGELVORRICHTUNG**
PRESSURE-CONTROL DEVICE
REGULATEUR DE PRESSION

(30) Priorität: 17.08.1993 DE 4327558
(43) Veröffentlichungstag der Anmeldung: 29.05.1996
(73) Patentinhaber: ITT Automotive Europe GmbH, 60488 Frankfurt am Main (DE)
(72) Erfinder: VOLZ, Peter, D-64291 Darmstadt (DE); WEISBROD, Helmut, D-61231 Bad-Nauheim (DE); FORCHE, Marcus, D-60316 Frankfurt am Main (DE)
(86) Internationale Anmeldenummer: EP9402601
(87) Internationale Veröffentlichungsnummer: WO9505300

(56) Entgegenhaltungen:
- EP-A- 0 492 110
- WO-A-91/17378
- WO-A-92/05989
- DE-A- 3 810 581
- DE-A- 4 016 754
- DE-A- 4 221 988
- GB-A- 2 021 240

## Beschreibung

Die Erfindung betrifft eine Druckregelvorrichtung, insbesondere Bremsdruckregelvorrichtung, wie Antiblockierregelvorrichtung, Antriebsschlupfregelvorrichtung nach dem Oberbegriff des Anspruchs 1.

In der nicht vorveröffentlichten DE-A-42 21 988 ist eine mit einer elektromagnetisch gesteuerten Ventil funktion versehener Schließkörper beschrieben, der als Ventilaufnahmekörper (Patrone) ausgeführt, in das druckmittelführende und mit Stufenbohrungen versehene Kanalsystem eines Ventilgehäuseblocks eingepreßt ist. Der Einpreßvorgang führt unter Umständen nicht nur zu einer mechanischen Verdrängung des im Bereich der Stufenbohrung befindlichen Werkstoffvolumens in die nutförmigen Einformungen am Ventilaufnahmekörper, sondern kann auch zu einer unerwünschten Mitverformung und Spannungsüberhöhung benachbarter und geschwächter Bereiche des Ventilgehäuseblocks führen, was die Maßhaltigkeit dieser festigkeitssensiblen Bereiche beeinträchtigt.

Aus der GB-A-2021240 geht ein Elektromnagnetventil hervor, das in einem Gehäuse eingesetzt ist, welches zur Abdichtung des im Gehäuse metallisch geführten Magnetankerstößels einen Leckage-Ringraum aufweist, der in Richtung der Atmosphäre mittels einer am Magnetanker befestigten Membran abgedichtet ist. Dieser Leckage-Ringraum steht mit einer weiteren Kammer und einem Auslaßventil einer Bremsanlage in Verbindung. Bei elektromagnetischer Erregung des Magnetventils hebt das dem Magnetstößel vorgelagerte Kugelventil von einem gehäuseseitigen Ventilsitz ab, so daß Druckmittel aus einem Radbremszylinder als Leckagestrom am Magnetstößel vorbei inden Leckage-Ringraum gelangen kann.

In der EP-A-0492110 wird eine Druckregelvorrichtung beschrieben, die zwischen den Aufnahmebohrungen der Elektromagnetventile in einem Gehäuse Zentrierlöcher aufweist, in die Zentrierstifte einer Monatgevorrichtung eingeschoben sind, um eine möglichst passgenaue Ausrichtung einer eine Leiterbahnfolie tragenden Platte gegenüber den Kontaktstiften der Elektromagnetventile zu ermöglichen.

Die DE-A-4016754 beschreibt eine Bremsdruckregelvorrichtung mit einem Gehäuse, in das Bohrungen und Kanäle eingebracht sind und mit paarweisen nebeneinander in einem Gahäuse angeordneten Elektromagnetventilen. Die Ventile werden durch Verformung des Gehäuses im Gehäuse befestigt. Die Spulenumwandelung eines jeden Elektromagnetventils greift mittels eines Zapfens in eine seitlich zu jeder Aufnahmebohrung der Ventile angeordnete Ausnehmung ein und bildet somit eine Verdrehsicherung.

Es ist die Aufgabe der Erfindung, eine Druckregelvorrichtung mit einer einfachen Ventilbefestigung im Gehäuse zu schaffen, die besonders in der durch benachbarte Bohrungen geschwächten Gehäusebereich eine möglichst geringe mechanische Beanspruchung aufweist.

Diese Aufgabe wird erfindungsgemäß für eine Druckregelvorrichtung der eingangs genannten Art durch die kennzeichnenden Merkmale des Patentanspruchs 1 gelöst.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen näher dargestellt und erläutert werden.

Es zeigen:
- Figur 1: eine Draufsicht auf das abschnittsweise dargestellte Gehäuse eine Druckregelvorrichtung,
- Figur 2: eine weitere Draufsicht auf ein abschnittsweisen dargestelltes Gehäuse einer alternativen Druckregelvorrichtung,
- Figur 3: eine Schnittdarstellung des Gehäuses entlang der in Figur 2 markierten Schnittlinie.

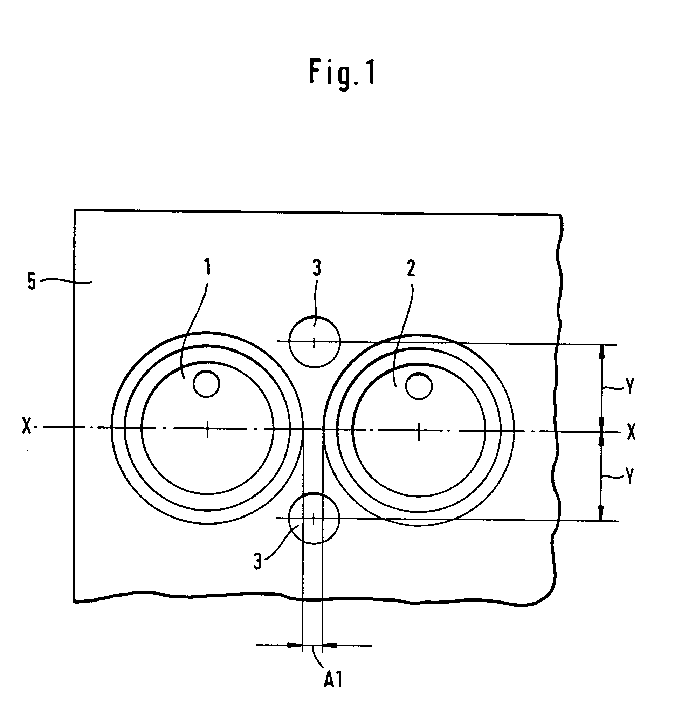

Die Figur 1 zeigt schematisch skizziert die Reihenanordnung mehrerer Bohrungen 1, 2 im Gehäuse 5 einer Druckregelvorrichtung für schlupfgeregelte Bremsanlagen. Die Bohrungen 1, 2 sind zwecks Aufnahme von elektromagnetisch betätigbaren, jedoch hierin nicht explizit dargestellten Schließkörpern 4 entsprechend groß dimensioniert, so daß nur eine relativ kleine Gehäusewandstärke A1 zwischen den benachbarten Bohrungen 1, 2 eine Reihe X verbleibt. Das Gehäuse 5 der Druckregelvorrichtung ist blockförmig gestaltet und aus Stahl oder Aluminium gefertigt. Die Bohrungen 1, 2 sind vorzugsweise als in Richtung des Gehäuseinneren im Durchmesser abnehmende Stufenbohrungen ausgeführt, in die die Schließkörper 4, bzw. im konkreten Ausführungsfall die elektromagnetisch ansteuerbaren Hydraulikventile, eingepreßt werden. Zwischen den Bohrungsabständen gelegen sowie außermittig zur Reihe X der Bohrungen 1, 2 versetzt angeordnet, sind als Sacklochbohrungen gestaltete Ausnehmungen 3 vorgesehen, die in einem definierten senkrechten Abstand Y zur kleinsten Gehäusewandstärke A1, bzw. diametral zur Längsachse der Reihe X, angeordnet sind. Jede Ausnehmung befindet sich somit in einer gezielt ausgewählten Plazierung innerhalb eines von der kleinsten Gehäusewandstärke A1 zur Außenberandung des Gehäuses 5 anwachsenden Bereichs. Gleichfalls bedarf es zur vorteilhaften Verlagerung von mechanischen Druckspannungen aus der kleinsten Gehäusewandstärke A1 einer definierten Dimensionierung der lichten Weite der Ausnehmungen 3, so daß die als Spannungs-Entlastungsbohrungen wirksamen Ausnehmungen 3 mindestens im Durchmesser so groß sind wie die kleinste Gehäusewandstärke A1.

Die Erfindung basiert auf der Erkenntnis, daß durch das Einbringen von Ausnehmungen definierter Größe, Formgebung und Entfernung von den einander benachbarten Bohrungen 1, 2 eine örtlich gezielte Querschnittschwächung im Gehäuse 5 zustande kommt, die eine günstige Druckkraftverteilung im Materialgefüge ermöglicht. Eine unzulässige Überlagerung von Druckspannungen bzw. eine unzulässige Spannungserhöhung im Bereich der kleinsten Gehäusewandstärke A1 wird hierdurch vermieden.

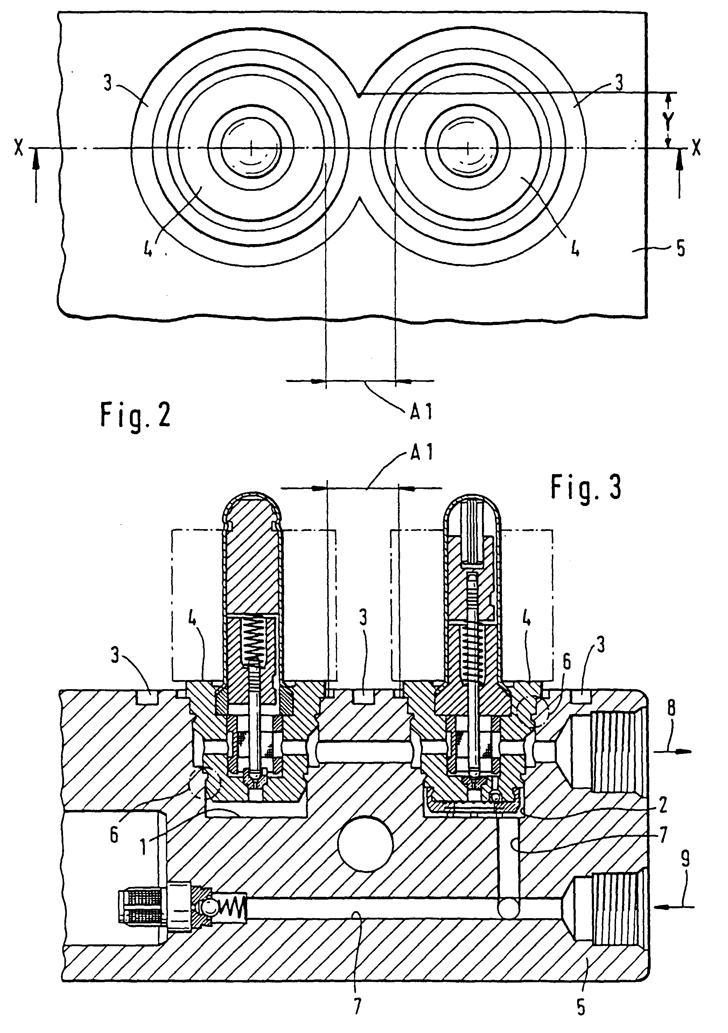

Die Figur 2 zeigt ebenso wie die Figur 1 den Abschnitt eines Gehäuses 5 für eine Druckregelvorrichtung in der Draufsicht, wobei zwei einander benachbarte Bohrungen 1, 2 vorgesehen sind, die gleichfalls zur Aufnahme von elektromagnetisch betätigbaren Hydraulikventilen (Schließkörper 4) als Stufenbohrungen ausgeführt sind. Erfindungsgemäß sind jedoch die Ausnehmungen 3 nicht auf den Bereich zwischen den beiden Bohrungen 1, 2 beschränkt, sondern als konzentrisch zu den Bohrungsachsen angeordnete Ringnuten ausgeführt, die sich im Bereich der kleinsten Gehäusewandstärke A1 überschneiden.

Die Figur 3 zeigt die Seitenansicht der Druckregelvorrichtung nach Figur 2 mit einer durch die Bohrungen 1, 2 verlaufenden Schnittebene. Zur Aufnahme der als elektromagnetischen Hydraulikventile ausgeführten Schließkörper 4 sind die Bohrungen 1, 2 als Stufenbohrungen gestaltet, wobei die Schließkörper 4 jeweils mittels zweier Selbstverstemmstellen 6 gehalten sind. Dies geschieht infolge des während des Einpreßvorganges in den jeweiligen Nutgrund der Schließkörper 4 verdrängten Werkstoffes, der aus dem die Bohrungsstufen bildenden Gehäusebereich plastisch verformt wird. Die abbildungsgemäßen Bohrungen 1, 2 stehen mit mehreren Kanälen 7 in Verbindung, die mittels Leitungsanschlüssen am Druckmittelverbraucher (Radbremse 8) bzw. an der Druckmittelversorgung (Bremsdruckgeber 9) einer schlupfgeregelten Bremsanlage angeschlossen sind. Gut zu erkennen sind hierin die in Figur 2 bereits erwähnten Ausnehmungen 3, die als konzentrisch zu den beiden Bohrungsachsen angeordnete Ringnuten sich mit einer Nuttiefe von nur wenigen Millimetern in das Material des Gehäuses 5 erstrecken. Zwischen den beiden Bohrungen 1, 2 der benachbarten Schließkörper 4 schneiden sich die Ringnuten im Bereich der kleinsten Gehäusewandstärke A1, so daß abschnittsweise eine gezielte Querschnittsschwächung des Gehäuses 5 zustande kommt, die eine unzulässige Spannungserhöhung im geschwächten Wandbereich der Bohrungen 1, 2 verhindert.

### Bezugszeichenliste

- 1, 2: Bohrungen
- 3: Ausnehmung
- 4: Schließkörper
- 5: Gehäuse
- 6: Selbstverstemmstelle
- 7: Kanal
- 8: Radbremse
- 9: Bremsdruckgeber
- A1: Gehäusewandstärke
- Y: Abstand
- x: Reihe

## Patentansprüche

1. Druckregelvorrichtung, insbesondere Bremsdruckregelvorrichtung, wie Antiblockierregelvorrichtung, Antriebsschlupfregelvorrichtung, mit einem Gehäuse (5), in das Bohrungen (1,2) und Kanäle (7) eingebracht sind, wobei die Bohrungen (1,2) zwecks Aufnahme von Schließkörpern (4) derart groß dimensiert sind, daß nur eine kleine Gehäusewandstärke zwischen benachbarten Bohrungen (1,2) verbleibt und wobei die Bohrungen (1,2) als in Richtung des Gehäuseinneren im Durchmesser abnehmende Stufenbohrungen aussind, in die die Schließkörper (4) eingepreßt und die Bohrungen (1,2) plastisch verformt in einem definierten wandnahen Abstand (Y) zur kleinsten Gehäusewandstärke (A1) zweier nebeneinander angeordneter Bohrungen (1,2) in der Oberfläche des Gehäuses (5) wenigstens eine Ausnehmung (3) vorgesehen ist, die im Durchmesser mindestens so groß ist wie die kleinste Gehäusewandstärke (A1), wobei durch das Einbringen von wenigstens Ausnehmung (3) definierter Größe, Formgebung und Entfernung von den einander benachbarten Bohrungen (1,2) eine örtlich gezielte Querschnittsschwächung im Gehäuse (5) zustande kommt, die eine unzulässige Spannungserhöhung im geschwächten Wandbereich der Bohrungen (1,2) verhindert.

2. Druckregelvorrichtung nach Anspruch 1, dadurch **gekennzeichnet**, daß die Ausnehmung (3) aus einem Sackloch gebildet ist.

3. Druckregelvorrichtung nach Anspruch 1, dadurch **gekennzeichnet**, daß der Schließkörper (4) als elektromagnetisch betätigbares Hydraulikventil ausgeführt ist.

4. Druckregelvorrichtung nach Anspruch 3, dadurch **gekennzeichnet**, daß zur Aufnahme der elektromagnetisch betätigbaren hydraulikventile in dem Gehäuse (5) mehrere Bohrungen (1,2) in Reihe ausgerichtet sind, wobei mehrere Ausnehmungen (3) beiderseits der Reihe (X) im erweiterten Querschnittsbereich des Gehäuses (5) angeordnet sind.

5. Druckregelvorrichtung nach Anspruch 1, dadurch **gekennzeichnet,** daß die Ausnehmung (3) als Nut gestaltet ist.

6. Druckregelvorrichtung nach Anspruch 5, dadurch **gekennzeichnet**, daß mehrere Nuten als Ringnuten jeweils konzentrisch zu den Achsen der die Schließkörper (4) aufnehmenden Bohrungen (1,2) ausgerichtet sind.

7. Druckregelvorrichtung nach Anspruch 6, dadurch **gekennzeichnet,** daß sich die Nuten zweier benachbarter Bohrungen (1,2) in Richtung der kleinsten Gehäusewandstärke (A1) kontinuierlich zunehmend schneiden.

## Claims

1. A pressure control device, in particular a braking pressure control device, such as an anti-lock control device or a traction slip control device, including a housing (5) in which bores (1, 2) and fluid passages (7) are formed, and the bores (1, 2) have so large dimensions to accommodate closure members (4) that only a small housing wall thickness remains between adjacent bores (1, 2), and the bores (1, 2) are stepped bores which decrease in their diameter in the direction of the interior of the housing, and the closure members (4) are press fitted and plastically deformed in the bores (1, 2), wherein at least one recess (3) is provided at a defined distance (Y) from the smallest wall thickness (A1) of the housing between two adjacent bores (1, 2) in the surface of the housing (5) and close to the wall, and the diameter of the recess (3) is at least as large as the smallest wall thickness (A1) of the housing, and the provision of at least this recess (3) of a defined size, shaping and distance from the adjacent bores (1, 2) causes a weakened cross-sectional thickness at defined locations in the housing (5) which prevents an unacceptable increase in tension in the weakened wall area of the bores (1, 2).

2. A pressure control device as claimed in claim 1,
**characterized** in that the recess (3) is a blindend bore.

3. A pressure control device as claimed in claim 1,
**characterized** in that the closure member (4) is provided as an electromagnetically operable hydraulic valve.

4. A pressure control device as claimed in claim 3,
**characterized** in that a plurality of bores (1, 2) are aligned in a row to accommodate the electromagnetically operable hydraulic valves in the housing (5), and a plurality of recesses (3) are arranged on either side of the row (X) in the enlarged cross-sectional area of the housing (5).

5. A pressure control device as claimed in claim 1,
**characterized** in that the recess (3) is a groove.

6. A pressure control device as claimed in claim 5,
**characterized** in that a plurality of grooves, provided as annular grooves, are aligned concentrically to the axes of the bores (1, 2) which receive the closure members (4).

7. A pressure control device as claimed in claim 6,
**characterized** in that the grooves of two adjacent bores (1, 2) intersect each other as they continuously increase in the direction of the smallest wall thickness (A1) of the housing.

## Revendications

1. Régulateur de pression, notamment régulateur de pression de freinage, tel que régulateur antiblocage, régulateur du glissement de traction, comprenant un boîtier (5) dans lequel des alésages (1, 2) et des conduits (7) sont ménagés, les alésages (1, 2) étant dimensionnés, en vue de recevoir des corps de fermeture (4), avec une grandeur telle qu'il ne subsiste qu'une petite épaisseur de paroi de boîtier entre des alésages (1, 2) voisins, les alésages (1, 2) étant réalisés sous forme d'alésages étagés dont le diamètre diminue vers l'intérieur du boîtier et dans lesquels les corps de fermeture (4) sont emboîtés à force, les alésages (1, 2) étant déformés plastiquement, tandis qu'au moins un évidement (3) est prévu dans la surface du boîtier (5) à une distance définie (Y), proche de la paroi, par rapport à l'épaisseur de paroi de boîtier la plus petite (A1) de deux alésages (1, 2) situés l'un à côté de l'autre, le ou les évidements (3) étant au moins aussi grands, en diamètre, que l'épaisseur de paroi de boîtier la plus petite (A1), le fait de ménager ce ou ces évidements (3), dont la grandeur, la forme et la distance par rapport aux alésages (1, 2) voisins l'un de l'autre sont définies, permettant d'obtenir, dans le boîtier (5), un affaiblissement de section transversale qui est atteint localement à dessein et empêche un accroissement inadmissible de contrainte dans la zone de paroi affaiblie des alésages (1, 2).

2. Régulateur de pression suivant la revendication 1, caractérisé en ce que l'évidement (3) est formé d'un trou borgne.

3. Régulateur de pression suivant la revendication 1, caractérisé en ce que l'obturateur (4) est réalisé sous forme d'une valve hydraulique à commande électromagnétique.

4. Régulateur de pression suivant la revendication 3, caractérisé en ce que plusieurs alésages (1, 2) sont alignés en rangée dans le boîtier (5) pour recevoir les valves hydrauliques à commande électromagnétique, plusieurs évidements (3) étant situés de part et d'autre de la rangée (X) dans la zone de section transversale plus large du boîtier (5).

5. Régulateur de pression suivant la revendication 1, caractérisé en ce que l'évidement (3) est réalisé sous forme de gorge.

6. Régulateur de pression suivant la revendication 5, caractérisé en ce que plusieurs gorges, réalisées sous forme de gorges annulaires, sont alignées respectivement d'une manière concentrique aux axes des alésages (1, 2) recevant les corps de fermeture (4).

7. Régulateur de pression suivant la revendication 6, caractérisé en ce que les gorges de deux alésages (1, 2) voisins se recoupent d'une manière croissant de façon continue vers la zone d'épaisseur de paroi de boîtier la plus petite (A1).
